Europäisches Patentamt

European Patent Office

Office européen des brevets

(11) Publication number: 0 388 932 A2

# EUROPEAN PATENT APPLICATION

(21) Application number: 90105362.9

(22) Date of filing: 21.03.90

(51) Int. Cl.5: B05D 5/06, B05D 7/16, B05D 1/36, //C09D5/29

(30) Priority: 22.03.89 US 327208

(43) Date of publication of application:
26.09.90 Bulletin 90/39

(84) Designated Contracting States:
BE DE ES FR GB IT NL SE

(71) Applicant: BASF CORPORATION
1419 Biddle Avenue
Wyandotte, Michigan(US)

(72) Inventor: Panush, Sol
28670 Oak Crest Drive
Farmington Hills, Michigan 48018(US)
Inventor: Gelmini, James M.
32453 Revere
Warren, Michigan 48092(US)

(74) Representative: Baillie, Iain Cameron et al
c/o Ladas & Parry Isartorplatz 5
D-8000 München 2(DE)

(54) Coating system exhibiting color travel and opalescent color effects.

(57) The present invention provides a multi-layer coating system comprising pigmented base coat, an overlying layer of pigmented transparent coat, and a layer of transparent non-pigmented protective coat, the multi-layer coating system exhibiting color travel and opalescent color effects.

The layer of a non-metallic primary base coat comprises a polymeric binder and a base coat pigment. The overlying layer of pigmented transparent intermediate coat comprises a polymeric binder and a pigment comprising particles of transparent metal oxide encapsulated mica and an organic pigment. In this transparent intermediate coat, the color of the organic pigment is complementary to the color of the transparent metal oxide encapsulated mica. A layer of non-pigmented transparent protective polymeric clear coat overlies the transparent intermediary coat.

EP 0 388 932 A2

# COATING SYSTEM EXHIBITING COLOR TRAVEL AND OPALESCENT COLOR EFFECTS

## 1. Technical Field

This invention relates to multi-layer coating systems. More particularly, this invention concerns a multi-layer coating system which exhibits color travel and opalescent color effects, to a method of applying such coating systems, and to the resultant coated articles.

## 2. Background of the Invention

Multi-coat coating systems are well known in the coatings industry for coating a variety of substrates ranging from wood, plastics, composites and metal. United States Patent 3,639,147 describes such a system for use in coating motor vehicles. Multi-coat coating systems provide metallic substrates with both the requisite protection from corrosion and marring and with pleasing decorative qualities. These two functions of coating systems are particularly important in the automobile industry where the underlying substrate is subjected to rigorous environmental conditions and where the appearance of the finished article is one of the most important selling features. Advances in electrocoating primer coatings have vastly improved the corrosion resistance of automobiles, while similar advances in finish coatings have provided striking new color effects and improved weather, sun, and mar resistance.

Recent years have seen the introduction of metallic, pearlescent and opalescent color effects in finish coatings for automobiles. Metallic effects, in which the appearance of sparkle is imparted to finish coatings, are achieved by the introduction into one or more layers of the finish coating of finely divided metallic flake or mica particles. Typical systems of this type are disclosed in United States Patents 4,048,136; 4,499,143; and 4,605,687. Pearlescent or opalescent color effects are achieved by introducing into one or more layers of the finish coating of particles of mica which have been previously encapsulated in a thin layer of a metal oxide such as iron oxide or titanium dioxide. Typical systems of this type are disclosed in United States Patents 4,539,258; 4,547,410; 4,551,491; 4,598,015; 4,598,020; and 4.615,940.

The variety of rich and lustrous colors which have been made available through these metallic, opalescent, and pearlescent finish coatings has whetted the appetite of the automotive consumer public. Accordingly, although multicoat coating systems have been in use for many years in the automotive industry, the art is in constant search of coating systems possessing novel or unique color effects which, at the same time, have the requisite durability, high gloss, and good color maintenance.

## Brief Description of the Drawing Figures

FIGURE 1 is a section through the CIE 1976 (L*, a*, b*) color space diagram showing color value (L*) on the vertical axis and hue (a* and b*) on the horizontal axes.

FIGURE 2 is a view of the section of the CIE 1976 (L*,a*,b*) color space diagram of Figure 1 along the L* axis.

## Disclosure of the Invention

In its principal embodiment, the present invention provides a multi-layer coating system comprising pigmented base coat, an overlying layer of pigmented transparent coat, and a layer of transparent non-pigmented protective coat.

The layer of a non-metallic primary base coat comprises a polymeric binder and a base coat pigment. The overlying layer of pigmented transparent intermediate coat comprises a polymeric binder and a pigment comprising particles of transparent metal oxide encapsulated mica and an organic pigment. In this transparent intermediate coat, the color of the organic pigment is complementary to the color of the transparent metal oxide encapsulated mica. A layer of non-pigmented transparent protective polymeric clear catt overlies the transparent intermediary coat. The coating system of the present invention exhibits color travel and opalescent color effects.

In another embodiment, the present invention provides a method of coating substrates with the multi-layer coating system comprising the steps of a) applying to the substrate a layer of a non-metallic primary base coat composition comprising a polymeric binder and a base coat pigment; b) forming a film of the base coat composition on the substrate; c) applying over the film of base coat a layer of a pigmented transparent intermediate coat composition comprising a polymeric binder and a pigment comprising particles of transparent metal oxide encapsulated mica and an organic pigment wherein the color of the organic pigment is complementary to the color of the transparent metal oxide encapsulated mica; d) forming a film of the intermediate coat composition on the base coat layer; e) applying a layer of transparent protective polymeric clear coat composition over the transparent intermediary coat; and f) forming a film of the transparent protective polymeric clear coat on the transparent intermediate coat.

In yet another embodiment, the present invention provides articles coated with the multi-layer coating system of the present invention.

### Detailed Description and Best Mode for Carrying Out the Invention

Any substrate material can be coated with the coating system of the present invention, including such materials as glass, ceramics, wood, plastics, and composites, depending upon the drying and/or curing requirements of the particular coating compositions used in the system. However, the coating system of the present invention is particularly adapted for metallic substrates, and specifically as an automotive paint finish system. The substrate may be bare substrate material or, in the case of metallic substrates, may be pretreated to impart corrosion resistance as by phosphatizing, priming or other similar treatment.

Examples of metallic substrates which can be coated with the coating system of the present invention include steel, aluminum, copper, magnesium, alloys thereof, etc. The chemical components of the coating system of this invention can be varied to suit the temperature tolerance of the substrate material. For example, in the case of plastic substrates, the components are constituted for air drying, or for drying at ambient temperature or curing at low temperatures, e.g. 150° F-180° F (65° C-82° C). Alternatively, in the case of metallic substrates and other substrate materials which can tolerate higher temperatures, the components of the present coating system are constituted for curing at higher temperatures e.g. over 180° F (82° C).

The base coat material, i.e. the pigmented polymer layer closest to the substrate, comprises any suitable film forming material conventionally used in this art and a colorant or pigmenting agent. Suitable film forming materials for use in formulating the colord basecoat compositions include acrylics, alkyds, polyurethanes, polyesters and aminoplast resins. Although the base coat can be deposited out of an aqueous carrier, it is preferred to use conventional volatile organic solvents such as aliphatic, cycloaliphatic and aromatic hydrocarbons, esters, ethers, ketones and alcohols including such things as toluene, xylene, butyl acetate, acetone, methyl isobutyl keyone, butyl alcohol, etc. When using volatile organic solvents, although it is not required, it is preferred to include from about 2% to about 50% by weight of a cellulose ester and/or wax (e.g. poly-ethylene) which facilitates quick release of the volatile organic solvent resulting in improved flow or leveling out of the coating. The cellulose esters used must be compatible with the particular resin systems selected and include such things as cellulose nitrate, cellulose propionate, cellulose butyrate, cellulose acetate butyrate, cellulose acetate propionate, and mixtures thereof. The cellulose esters when used are preferably used in about 5% to about 20% by weight based on film forming solids. The acrylic resins in the base coat may be either thermoplastic (acrylic lacquer systems) or thermosetting. Acrylic lacquers such as are described in U.S. Pat. No. 2,860,110 are one type of film forming composition useful according to this invention in the base coat. The acrylic lacquer compositions typically include homopolymers of methyl methacrylate and copolymers of methyl methacrylate which contain among others, acrylic acid, methacrylic acid, alkyl esters of acrylic acid, alkyl esters of methacrylic acid, vinyl acetate, acrylonitrile, styrene and the like.

When the relative viscosity of the acrylic lacquer polymer is less than about 1.05, the resulting films have poor solvent resistance, durability and mechanical properties. On the other hand, when the relative viscosity is increased above the 1.40 level, paints made from these resins are difficult to spray and have high coalescing temperatures.

Another type of film forming material useful in forming the base coat of this invention is a combination of a cross-linking agent and a carboxy-hydroxy acrylic copolymer. Monomers that can be copolymerized in the carboxy-hydroxy acrylic copolymer include esters of acrylic and methacrylic acid with alkanols containing 1 to 12 carbon atoms, such as ethyl acrylate, methyl methacrylate butyl acrylate, butyl methacrylate, 2-ethylhexyl acrylate, lauryl methacrylate, benzyl acrylate, cyclohexyl methacrylate, and the like. Additional monomers are acrylonitrile, methacrylonitrile, styrene, vinyl toluene, α-methyl styrene, vinyl acetate, and so forth. These monomers contain one polymerizable ethylenically unsaturated group and are devoid of hydroxyl and carboxylic groups.

The cross-linking agents used in combination with the hydroxy-carboxy copolymers are those compositions which are reactive with hydroxy and/or carboxylic acid groups. Examples of such cross-linking agents are polyisocyanates (typically di-and/or triisocyanates) polyepoxides and aminoplast resins. Particularly preferred cross-linking agents are the aminoplast resins.

The polyisocyanates when reacted with hydroxyl bearing polyester or polyether or acrylic polymers will yield urethane films useful in the process of this invention in both the base coat and topcoat. The isocyanate (-N = C = O) - hydroxyl (-OH) reaction takes place readily at room temperature, so that ambient and low temperature cure is possible.

Among other resins useful in the base coat are those commonly known as alkyd resins which are defined to include fatty acid or oil containing esterification products. The methods for preparing these resins are well known in the art. The preferred alkyd resins useful in this invention are those containing from about 5 to about 65 weight percent of a fatty acid or oil and having an hydroxyl equivalent to carboxy equivalent ratio of from about 1.05 to 1.75. Alkyd resins having less than about 5% fatty compound are classified as the "oil-less" alkyd resins of polyester resins described hereinafter. On the other hand, alkyd resins containing greater than 65% of a fatty compound exhibit poor baking properties, poor chemical resistance and unsatisfactory adhesion to either the base coat or the substrate. When the hydroxyl to carboxy equivalent ratio is less than about 1.05 gelation can result during polymer preparation while resins prepared having a ratio in excess of 1.75 have low molecular weights and therefore poor chemical resistance. These alkyd resins can also be used as the topcoat of this invention. When this is the case it is preferred that the oil or fatty acid portion of the alkyd resin contain a light colored baking oil or fatty acid such as coconut or dehydrated castor oils or fatty acids. Furthermore, when these resins are used as topcoats they can be reacted with various acrylic or ethylenically unsaturated monomers as described above to produce vinyl modified alkyd resins.

Curing of these alkyd resins can be accomplished by blending with any of the previously described cross-linking agents in the same weight ratios as are used with carboxy-hydroxy copolymers.

Included among the various fatty acids and oils useful in preparing these alkyd resins are the fatty acids derived from the following oils: castor, dehydrated castor, coconut, corn, cottonseed, linseed, oticica, perilla, poppyseed, safflower, soybean, tung oil, etc., and the various rosins containing tall oil fatty acids. Useful polyols include the various glycols, such as ethylene glycol, propylene glycol, neopentyl glycol, butylene glycol, 1,4-butanediol, hexylene glycol, 1,6-hexanediol, the polyglycols such as diethylene glycol or triethylene glycol, etc.; the triols such as glycerine, trimethylol ethane, trimethylol propane, etc., and other higher functional alcohols such as pentaerythritol, sorbitol, mannitol, and the like. Acids useful in preparing the alkyd resins of this invention include mono-fuctional acids such as rosin acids, benzoic acid, *p-tert*-butyl benzoic acid and the like: the polyfunctioal acids such as adipic acid, azelaic acid, sebacic acid, phthalic acid or anhydride, isophthalic acid, terephthalic acid, dimerized and polymerized fatty acids, trimellitic acid, and the like.

Yet another useful base coat is prepared using nonaqueous dispersions such as are described in U.S. Pat. Nos. 3,050,412; 3,198,759; 3,232,903; and 3,255,135. Typically these dispersions are prepared by polymerizing a monomer such as methyl methacrylate in the presence fo a solvent in which polymers derived from the above monomer are insoluble and a precursor which is soluble in the solvent. Nonaqueous dispersions can have a relative solution viscosity as previously defined of about 1.05 to 3.0. Dispersions having a relative solution viscosity in excess of about 3.0 are difficult to spray and have high coalescence temperatures while dispersions with a relative solution viscosity less than about 1.05 have poor chemical resistance, durability and mechanical properties. The monomers useful in preparing the above-dispersed copolymers or hompolymers are those listed previously as useful in forming the carboxyhydroxy acrylic copolymers.

In another instance the base coat film can be produced from resins known as polyesters or "oil-less" alkyd resins. These resins are prepared by condensing nonfatty containing polyols and polyacids. Included among the useful polyacids are isophthalic acid, phthalic acid or anhydride, terephthalic acid, maleic acid or anhydride, fumaric acid, oxalic acid, sebacic acid, azelaic acid, adipic acid, etc. Mono basic aids such as benzoic, *p-tert*-butylbenzoic and the like can also be utilized. Among the polyalcohols are the diols or glycols such as propylene glycol, ethtlene glycol, bytylene glycol, 1,4-butanediol, neopentyl glycol, hexylene glycol, 1,6-hexanediol, and the like; the triols such as trimethylolethane, trimethylolpropane and glycerine and various other higher functional alcohols such as pentaerythritol.

4

The base coat also includes one or more colorants or pigmenting agents. The pigment may be any organic or inorganic pigmenting agent known to those skilled in the coatings arts. Organic pigments are preferred because of their higher chromaticity, but in the base coat layer inorganic pigments may be employed, either alone, or in combination with organic pigments to obtain the desired hiding of the substrate. Representative examples of inorganic pigments which may be used in the base coat layer include titanium dioxide, opaque yellow oxide, molybdate orange, opaque red oxide, iron blue, carbon black, and hydrate chrome oxide. Representative examples of organic pigments which may be employed include phthalocyanine green, phthalocyanine blue, anthrapyrimidine yellow, flavanthrone yellow, imidazole orange, quinacridrone red, carbazole blue, dioxazine blue, indanthrene blue, azo browns, isoindolinones, and high molecular weight azo pigments.

The base coat is the primary color coat which not only provides the basic color, but is also the protective (hiding) enamel. It is carefully chosen for value (degreee of darkness) and hue (undertone color). The color imparted to the base coat is critical insofar as coordination with subsequently applied coating materials to produce the color travel and opalescent color effects. The pigmentation must be nonmetallic and be added to the polymer binder in such amounts so as to have sufficient hiding of the substrate. The pigment to binder ratio in the base coat composition will vary with the chroma and hiding power of the particular pigment chosen. By the term "non-metallic" is meant any pigmenting agent which is free of metallic flake particles such as silver, aluminum and the like, as well as particles of mica or metal-oxide coated mica. The base coat can be of any hue as long as it possesses sufficient chromaticity and hiding power.

Representative examples of pigments for the colored base coat of the multi-coat system of this invention are presented in Table 1.

## Table 1

## Pigment Composition of the Base Coat Layer

| Example | Composition | | Basecoat Color Color Name |
|---------|-------------|--|---------------------------|
| **High Chroma Colors** | | | |
| 1 | C.I. Pigment Brown C.I. No. 77310 | | Harvest gold |
| 2 | C.I. Pigment Red 170 C.I. No. 12475 | | Tangerine |
| 3 | C.I. Pigment Violet 19 C.I. No. 46500 | | Strawberry |
| 4 | C.I. Pigment Blue 15:1 C.I. No. 74160 C.I. Pigment Blue 27 C.I. No. 77510 | (50%) (50%) | Dark navy |
| 5 | C.I. Pigment Violet 23 C.I. No. 51319 | | Eggplant |

5

## (Table 1 continued)

| 6 | C.I. Pigment Green 7<br>C.I. No. 74260<br>Titanium dioxide | (70%)<br><br>(30%) | Evergreen |
|---|---|---|---|

**Low Chroma (Pastel) Colors**

| 7 | Titanium dioxide<br>C.I. Pigment Yellow 154<br>C.I. No. 11781 | (98%)<br>( 2%) | Pale lemon |
|---|---|---|---|
| 8 | Titanium dioxide<br>C.I. Pigment Red 170<br>C.I. No. 12475 | (98%)<br>( 2%) | Peach |
| 9 | Titanium dioxide<br>C.I. Pigment Violet 19<br>C.I. No. 46500 | (98%)<br>( 2%) | Rose petal |
| 10 | Titanium dioxide<br>C.I. Pigment Blue 15:1<br>C.I. No.74160<br>C.I. Pigment Blue 27<br>C.I. No. 77510 | (98%)<br>( 1%)<br><br><br>( 1%) | Cobalt blue |
| 11 | Titanium dioxide<br>C.I. Pigment Violet 23<br>C.I. No. 51319 | (98%)<br>( 2%) | Blueberry |
| 12 | Titanium dioxide<br>C.I. Pigment Green 7<br>C.I. No. 74260 | (98%)<br>( 2%) | Mint green |

The base coat is typically applied (air or rotational atomization) in about 0.4 mil to about 2.0 mils in thickness with 0.5 mil to 1.5 mils preferred and 0.7 mil to 0.8 mil optimum. The amount of pigment in the base coat generally comprises about 1.0% to about 20.0% by weight, preferably about 7.5% to about 15% and typically about 10% by weight.

The colored base coat is overlayered by a transparent or semi-transparent intermediate interference coat. Any of the above cited polymers may be used as the binder in the transparent interference coat as long as they are substantially clear or transparent. The pigmentation in this coat is produced by incorporation of both an organic colorant or pigment together with colored mica flakes bearing a transparent layer of metal oxide such as iron oxide or titanium dioxide. The pigment of this layer thus comprises both the organic colorant and the colored metal oxide encapsulated mica. Any organic pigmenting agent known to practitioners of the coatings arts may be employed in this intermediate coating. However, to maintain the desired degree of transparency in this layer, organic pigmenting agents are preferred over inorganic pigments which tend to dull or hide the color of the underlying base coat layer.

This intermediate interference coat is a transparent, light scattering layer which reflects and refracts each lightwave as it enters the layer, allowing penetration of the lightwaves to the base coat where they will be reflected back through the interference layer and again reflected and refracted before exiting the layer. The bending and redirection of the lightwaves as they pass through or bounce off the coated mica produces the color shifting effects as well as the opalescent effects of the overall multi-coat system.

The pigment to binder weight ratios (P/B) in this intermediate coating layer are carefully controlled to range between about 0.0025 to about 0.10, preferably from about 0.005 to about 0.05. The pigment to binder ratio must be kept below about 0.10, most preferably at or below about 0.05, depending upon the organic colorant employed, to prevent hiding or masking of the underlying base coat layer by the pigmented intermediate or interference layer. On the other hand the pigment to binder ratios of this intermediate coat must be kept above about 0.0025, preferably above about 0.005, depending upon the organic colorant employed, to achieve the desired color effects in the finished multi-coat system. For example, with lighter hues such as yellow organic pigments, higher amounts of pigment may be employed, while lesser amounts may be employed with intense pigments such as the reds and purples.

Optimum transparency and desired color effects are imparted to this intermediate transparent coating layer at a pigment to binder ratio of about 0-005. At this level of pigmentation, the ratio of transparent, metal oxide encapsulated colored mica to organic colorant is preferably about 0.95/0.05. Moderate transparency is imparted to the intermediate coating layer, while still retaining the desired final color effects for the multi-coat system, when the pigment to binder ratio in the intermediate coating layer is about 0.05. At this level of pigmentation, the ratio of transparent, metal oxide encapsulated colored mica to organic colorant is preferably about 0.80/0.20.

The colored, transparent, metal oxide encapsulated mica particles suitable for use in the intermediate coating layer are of the types available commercially from such suppliers as EM Chemicals, 5 Skyline Drive, Hawthorne, NY 10532 and the Mearle Corp., 1057 Lower South Street, Peekskill, NY 10566. The mica particles are encapsulated in a thin, transparent metal oxide coating of such materials as titanium dioxide or iron oxide, and are available in a rich variety of colors. The particles are carefully screened and controlled particles all within about 5 microns to about 60 microns (preferably about 5 microns to about 45 microns, and typically about 5 microns to about 35 microns) in their largest dimension and about 0.25 micron to about one micron in thickness. The closely controlled particle size provides the transparent, colored, translucent, reflective and refractive features necessary for this layer. For additional exterior durability (e.g. exposure to the sun) the mica particles may be coated with minor amounts of other additives (e.g. additional layers) such as high temperature stable metal oxides such as antimony, copper, calcium, cadmium, chromium, cobalt, barium, strontium, manganese, magnesium, nickel and lithium can also be used on the encapsulated mice. The oxide encapsulation layer is generally in the moleculare range of thicknesses representing about 10% to about 85% by weight of the total weight of the encapsulated mica particle, preferably about 20% to about 60% and typically about 29% to about 48% by weight.

The uniformity of shape (platelet) and smoothness of the metal oxide encapsulated mica pigment according to the present invention (e.g. as compared to the highly fragile, three dimensional and complicated configuration of aluminum flake, a standard in the automotive paint industry) eliminates the problem of color drift due to the shear forces (yielding fragmentation problems) in the handling (overhead pumping facilities) and application problems of ghosting, mottling, silkiness and repair color matching.

The color choices for the organic colorant or pigmenting agent and the color of the metal oxide coated transparent mica are determined by the choice of color for the underlying base coat. In one embodiment of the present invention, the organic colorant or pigment in the intermediate layer is chosen to be the same pigment or a pigment of a very similar color to that of the base coat, and the color of the transparent mica is chosen to be a complementary color. In an alternative embodiment, the reverse is the case; that is, the color of the transparent mica is chosen to be of the same color or a similar color to that of the base coat, while the organic colorant or pigment is chosen from a complentary color.

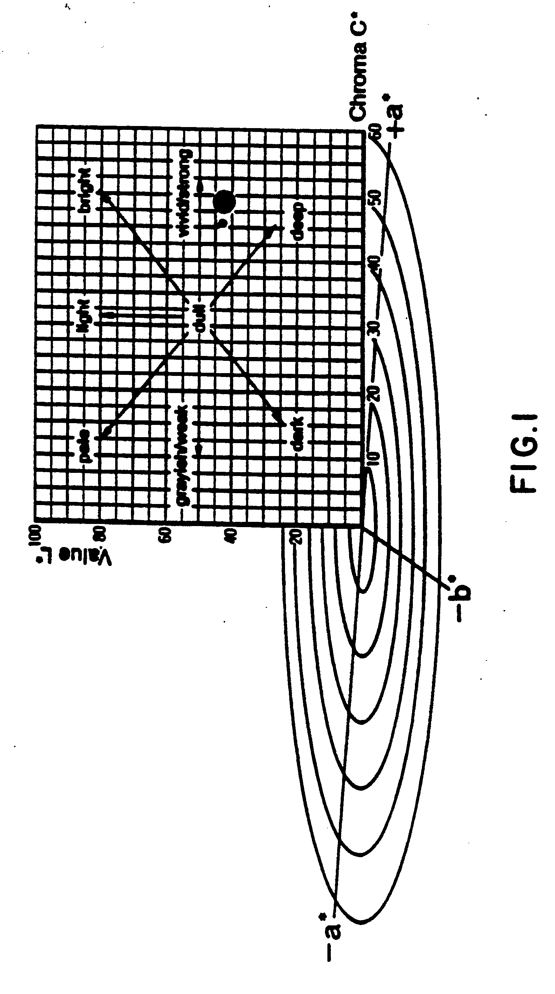

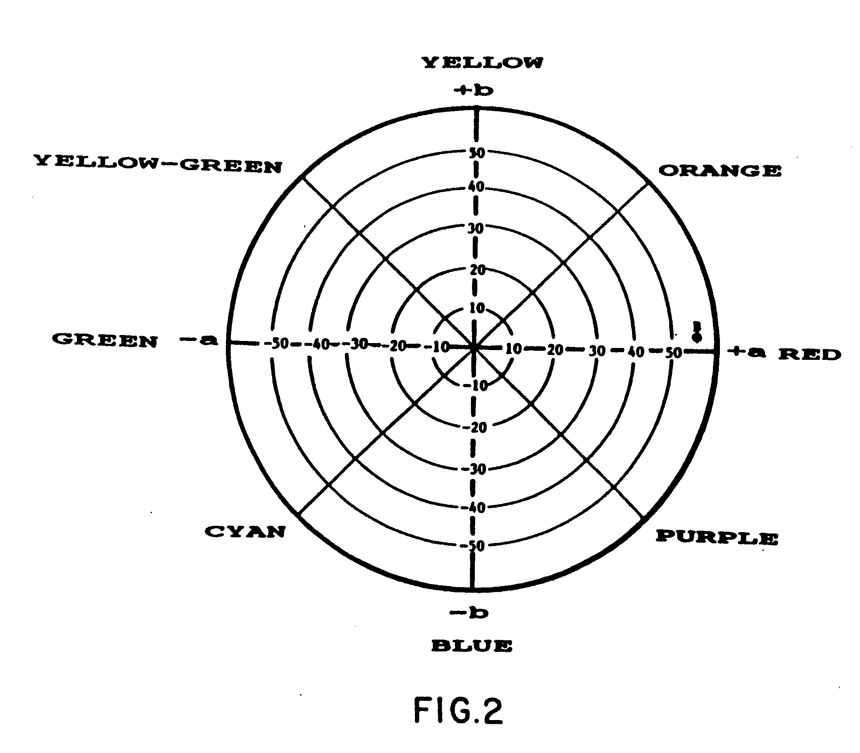

The meanings of the terms "similar color" or "complementary color" can be made clear by reference to Figures 1 and 2. Referring to Figure 1, there is shown a simplified section through the CIE 1976 (L*, a*, b*) color space diagram based on the color measurement system introduced by Richard S. Hunter, "Photoelectric Tristimulus Colorimetry with Three Filters," National Bureau of Standards Circular 429, United States Government Printing Office, 1942, reprinted in J. Opt. Soc. Am., 32, 509-538 (1942) which is incorporated herein by reference. A particular color can be completely described by defining its value (lightness), hue (color), and chroma (degree of color saturation). In this system the value of a color, L*, corresponds to its lightness and ranges from zero (black) to one hundred (white). The hue of a color is designated by values of a* and b*, with a* corresponding to redness (if a* is positive) or greenness (if a* is negative), and yellowness (if b* is positive) or blueness (if b* is negative). The chroma of the color is designated C* and is equal to the square root of the sum of the squares of a* and b*.

In Figure 1, the value (L*) of a color is measured on the vertical axis, while a* and b* are measured as points on a rectangular coordinate system in the plane horizontal to the L* axis. Chroma (C*) is measured by the perpendicular distance from the L* axis to the point fixed by a* and b*. For example, in Figure 1, the color represented by point A is shown having a value of L*=44, and a hue represented by a*=45 and b*=10. The chroma, or degree of saturation of this color is thus $(45^2 + 10^2)^{0.5} = 46.10$.

As can be seen further from Figure 1, the common descriptions of colors can be derived from the value and chroma of a color. For example, colors of a particular hue can be "bright" (high value and chroma), "vivid" (high chroma, medium value), "deep" (low value and high chroma), "dark" (low value and chroma), "weak" (low chroma, medium value), "pale" (high value and low chroma), or "light" (high value, moderate chroma). Colors of intermediate value tend toward grayishness or weakness as their chroma decreases.

Referring to Figure 2, a horizontal section through the CIE 1976 (L*, a*, b*) color space diagram at constant L* is shown. The common names of the colors are shown around the periphery of the graph.

In accordance with the present invention, the color choice for the primary basecoat color determines the preferred color choices for the metal oxide encapsulated mica particles and the organic colorant or pigment of the semi-transparent intermediate color coat. If, for example, point B in Figure 2 represents the color choice for the primary basecoat layer, the color of either the metal oxide encapsulated mica particles or the organic colorant or pigment of the intermediate color coat is preferably chosen to be either the same color, or from colors lying in the the same quadrant as point B, preferably represented by points close to B of Figure 2. Colors lying in the same quadrant of the color wheel as point B would be similar to B. In this example, point B represents a red hue, so the choice for either the encapsulated mica particles or the organic colorant or pigment of the intermediate layer is made from hues ranging from orange, through red to purple. A greater degree of latitude in choice of intermediate layer pigment is permissible when the organic colorant or pigment is chosen to have the same or similar color to the pigment in the base coat layer. It is possible to employ the same pigmenting agent as that used in the base coat layer, or to choose an organic pigment which is of a hue close to that of the base coat pigment.

Alternatively, when the colored, transparent metal oxide encapsulated mica is chosen to have a coolor similar to that of the base coat pigment, the choices are more limited by availability. In these cases, the encapsulated mica color is chosen to be as close to that of the basecoat pigment as possible.

The perception of color is very subjective and what one observer would call "red" another might call "orange-red." However, as used throughout this specification and appended claims, the color names are defined as follows: red is any transmitted or reflected color of a wavelength of between about 610 and about 700 nanometers; orange is any transmitted or reflected color of between about 590 and about 610 nanometers; yellow is any transmitted or reflected color of between about 570 and about 590 naometers; green is any transmitted or reflected color between about 500 and about 570 nanometers; blue is any transmitted or reflected color of between about 460 and about 500 nanometers; and violet or purple is any transmitted color of between about 400 and about 460 nanometers.

The choice of hue having been thus made for one of the two materials (e.g. the colored metal oxide encapsulated mica particles or organic colorant or pigment), a complementary hue is chosen for the other. This corresponds to a hue chosen from the opposite quadrant, i.e., in the example given, from hues ranging from yellow-green through green to cyan, preferably from a color lying diammetrically opposite on the color wheel represented by Figure 2. For example, using a red basecoat hue represented by point B in Figure 2, the organic colorant or pigment of the intermediate color coat is chosen from hues ranging from orange, through red to purple, with the the metal oxide encapsulated mica particles chosen from a hue ranging from yellow-green through green to cyan.

Representative examples of pigments employed in the intermediate coating layer are presented in Table 2.

## Table 2

### Pigment Composition of the Intermediate Coating Layer

| Example | Mica Pigment | Intermediate Coat Color Organic Pigment | | Color | P/B Ratio |
|---|---|---|---|---|---|
| 13 | Rutile Platinum Gold (80%) | C.I. Pigment Violet 23 C.I. No. 51319 | (20%) | Violet | 0.05 |
| 14 | Rutile Copper Pearl (80%) | C.I. Pigment Blue 15:1 C.I. No. 74160 | (20%) | Royal Blue | 0.05 |
| 15 | Rutile Red Pearl (80%) | C.I. Pigment Green 7 C.I. No. 74260 | (20%) | Emerald | 0.05 |
| 16 | Rutile Blue Pearl (80%) | C.I. Pigment Red 170 C.I. No. 12475 | (20%) | Apricot | 0.05 |
| 17 | Rutile Lilac Pearl (80%) | C.I. Pigment Yellow 154 C.I. No. 11781 | (20%) | Lemon | 0.05 |
| 18 | Rutile Green Pearl (80%) | C.I. Pigment Red 179 C.I. No. 71130 | (20%) | Cinnamon | 0.05 |
| 19 | Rutile Platinum Gold (95%) | C.I. Pigment Violet 23 C.I. No. 51319 | ( 5%) | Lavender | 0.005 |
| 20 | Rutile Copper Pearl (95%) | C.I. Pigment Blue 15:1 C.I. No. 74160 | ( 5%) | Sky Blue | 0.005 |
| 21 | Rutile Red Pearl (95%) | C.I. Pigment Green 7 C.I. No. 74260 | ( 5%) | Slate Green | 0.005 |

EP 0 388 932 A2

EP 0 388 932 A2

## Table 2 (concluded)

| 22 | Rutile Blue Pearl | (95%) | C.I. Pigment Red 170<br>C.I. No. 12475 | ( 5%) | Bone | 0.005 |
|----|-------------------|-------|----------------------------------------|-------|------|-------|
| 23 | Rutile Lilac Pearl | (95%) | C.I. Pigment Yellow 154<br>C.I. No. 11781 | ( 5%) | Antique White | 0.005 |
| 24 | Rutile Green Pearl | (95%) | C.I. Pigment Red 179<br>C.I. No. 71130 | ( 5%) | Mauve | 0.005 |

## Table 3
### Pigment Composition of Multicoat Coatings

| Example | Basecoat Color | Intermediate Coat | Final Color Effect |
|---|---|---|---|
| **Red/Green Blends** | | | |
| 25 | Example 3 - Strawberry | Example 15 - Emerald | Medium Gunmetal Gray |
| 26 | Example 3 - Strawberry | Example 21 - Emerald | Magenta |
| 27 | Example 3 - Strawberry | Example 18 - Cinnamon | Cinnamon |
| 28 | Example 3 - Strawberry | Example 24 - Mauve | Torch Frost |
| 29 | Example 6 - Evergreen | Example 15 - Emerald | Bluegrass* |
| 30 | Example 6 - Evergreen | Example 21 - Slate green | Mistletoe* (Blue-green face color, rich yellow-green flop, color, with red-green metallic color at flash angle.) |
| 31 | Example 6 - Evergreen | Example 18 - Cinnamon | Chestnut |
| 32 | Example 6 - Evergreen | Example 24 - Mauve | Forest |
| 33 | Example 9 - Rose Petal | Example 15 - Emerald | Mint Julep |
| 34 | Example 9 - Rose Petal | Example 21 - Slate Green | Dove Gray* (Soft gray face color, soft gray flop color, with a rose color at the flash angle.) |

EP 0 388 932 A2

(Table 3 continued)

| | | | |
|---|---|---|---|
| 35 | Example 9 - Rose Petal | Example 18 - Cinnamon | Bittersweet |
| 36 | Example 9 - Rose Petal | Example 24 - Mauve | Mauve Frost |
| 37 | Example 12 - Mint Green | Example 15 - Emerald | Kelly Green |
| 38 | Example 12 - Mint Green | Example 21 - Emerald | Pale Mint |
| 39 | Example 12 - Mint Green | Example 18 - Cinnamon | Nugget Brown |
| 40 | Example 12 - Mint Green | Example 24 - Mauve | Seamist Green |

Yellow-Purple Blends

| | | | |
|---|---|---|---|
| 41 | Example 7 - Pale Lemon | Example 13 - Violet | Plum |
| 42 | Example 7 - Pale Lemon | Example 19 - Lavender | Flesh |
| 43 | Example 7 - Pale Lemon | Example 17 - Lemon | Lemon |
| 44 | Example 7 - Pale Lemon | Example 23 - Antique White | Pale Lemon |
| 45 | Example 11 - Blueberry | Example 13 - Violet | Deep Plum |
| 46 | Example 11 - Blueberry | Example 19 - Lavender | Medium Blueberry |
| 47 | Example 11 - Blueberry | Example 17 - Lemon | Rosewood* (Gray-yellow face color, rich yellow-green flop color, with a rosewood metallic color at the flash angle.) |
| 48 | Example 11 - Blueberry | Example 23 - Antique White | Lilac Cream |

EP 0 388 932 A2

(Table 3 continued)

| 49 | Example 1 – Harvest Gold | Example 13 – Violet | Medium Grape |
| 50 | Example 1 – Harvest Gold | Example 19 – Lavender | Harvest Gold |
| 51 | Example 1 – Harvest Gold | Example 17 – Lemon | Light Canteloupe* (Rich yellow face color, rich yellow-green flop color, with a soft red-orange color at the flash angle.) |
| 52 | Example 1 – Harvest Gold | Example 23 – Antique White | Squash |
| 53 | Example 5 – Eggplant | Example 13 – Violet | Light Eggplant |
| 54 | Example 5 – Eggplant | Example 19 – Lavender | Olive |
| 55 | Example 5 – Eggplant | Example 17 – Lemon | Light Plum* |
| 56 | Example 5 – Eggplant | Example 23 – Antique White | Grape |

## Orange-Blue Blends

| 57 | Example 4 – Dark Navy | Example 14 – Royal Blue | Lilac |
| 58 | Example 4 – Dark Navy | Example 20 – Sky Blue | Medium Eggplant |
| 59 | Example 4 – Dark Navy | Example 16 – Apricot | Claytone* (Orange-gray face color, rich orange flop, violet color at flash angle.) |
| 60 | Example 4 – Dark Navy | Example 22 – Bone | Deep Royal |
| 61 | Example 10 – Cobalt Blue | Example 14 – Royal Blue | Royal Blue |

EP 0 388 932 A2

(Table 3 concluded)

| 62 | Example 10 - Cobalt Blue | Example 20 - Sky Blue | Serendipity Blue |
| 63 | Example 10 - Cobalt Blue | Example 16 - Apricot | Clay |
| 64 | Example 10 - Cobalt Blue | Example 22 - Bone | Sea Mist |
| 65 | Example 2 - Tangerine | Example 14 - Royal Blue | Regal Blue |
| 66 | Example 2 - Tangerine | Example 20 - Sky Blue | Persimmon |
| 67 | Example 2 - Tangerine | Example 16 - Apricot | Bittersweet Frost |
| 68 | Example 2 - Tangerine | Example 22 - Bone | Watermelon* (Ceramic orange face color, rich orange flop color, red-orange-blue color at flash angle.) |
| 69 | Example 8 - Peach | Example 14 - Royal Blue | Maui Blue |
| 70 | Example 8 - Peach | Example 20 - Sky Blue | Dove Gray |
| 71 | Example 8 - Peach | Example 16 - Apricot | Tangerine Frost |
| 72 | Example 8 - Peach | Example 22 - Bone | Sea Mist |

* Examples which demonstrated striking opalescence color effect.

Goniospectrophotometric measurements were made from selected steel panels which had been coated by the method of the present invention. The measurements were made on a Zeiss Model BLX 111 Goniospectrophotometer using a standard D65 illuminant at illumination angles of 25°, 45°, and 70°. These data are presented in Table 4 and illustrate numerically the hue shifts observed with coatings in accordance with the present invention when viewed from different angles. The Table gives the value (L*), hue (a* and b*), and chroma (C) for three representative multi-layer coating systems of the present invention at different viewing angles. For convenience, a color name has been assigned to each perceived color. Referring to Table 4, it can be seen that with some of the multi-layer coating systems of this invention, there is a striking shift in hue with minimal attendant shift in color value (e.g. Examples 47 and 59). In other cases, there is lesser shift in hue with a sizeable attendant shift in color value (Example 30). In both instances, however, there is a definite perceived shift in the color viewed by an observer.

Table 4

| Goniospectrophotometric Measurements | | | | |
|---|---|---|---|---|
| Example | | Color Measurement Angle | | |
| | | 25° | 45° | 70° |
| 59 | | | | |
| | L* | 39.127 | 30.790 | 27.689 |
| | a* | 6.830 | 10.896 | 14.023 |
| | b* | -10.736 | 5.886 | 15.931 |
| | C | 12.724 | 12.384 | 21.224 |
| | | (Soft violet) | (Gray orange) | (Rich orange) |
| 47 | L* | 55.277 | 49.638 | 48.412 |
| | a* | 10.726 | 0.616 | -2.280 |
| | b* | 1.412 | 11.730 | 16.731 |
| | C | 10.819 | 11.746 | 16.886 |
| | | (Soft rosewood) | (Gray yellow-green) | (Rich yellow-green) |
| 30 | L* | 35.715 | 28.288 | 27.792 |
| | a* | -14.050 | -35.495 | -41.461 |
| | b* | -0.872 | -0.469 | -0.290 |
| | C | 14.077 | 35.498 | 41.462 |
| | | (Blue-green metallic) | (Yellow-green) | (Rich yellow-green) |

The intermediate coating layer is overlayered with a final layer which is also constituted of the same polymers as above recited with the caveat of being totally transparent. This layer should contain ultraviolet light stabilizers or absorbers (e.g. hindered amines) to absorb and screen out ultraviolet radiation. This transparent clear coat should be applied at about 1.8 mils to 2.3 mils dry film thickness. Optimum dry film is about 1.9 mils to 2.1 mils thick. The clear coat should be applied wet-on-wet over the interference coat.

Utilizing the compositions of the present invention offers a means of combining the desirable properties of a combination of resin systems. For example, in automotive finishes the pigment control properties of acrylic lacquers can be combined with the chemical resistance properties of thermosetting acrylic resins by applying a thermosetting acrylic clear coat over a pigmented thermplastic acrylic lacquer base or interference coat (although acrylic lacquers may be used for all layers). Likewise, in appliance finishes the chemical resistance of polyester resins can be combined with the lower cost of thermosetting actylic resins by applying a polyester clear topcoat over a pigmented thermosetting acrylic base or interference coat. Although any of the above-mentioned thermoplastic materials may be used to form the transparent topcoat, better durability is achieved if the topcoat is one of the above-cited thermosetting materials, i.e. the material containing the cross-linking agents. In all instances where the above methods and compositions are used extremely high gloss films result. In fact, using the process of this invention gloss readings in excess of 100 are readily obtained.

The base coat, interference coat and the topcoat can be applied by any conventional methods in this art such as brushing, spraying, dipping, flow coating etc. Typically spray application is used, especially for automotive finishing. Various types of spraying can be utilized such as compressed air spraying, electrostatic spraying, hot spraying techniques, airless spraying techniques etc. The transparent intermediate coat coat is typically applied from about 0.4 mil to about 2.0 mils and preferably about 0.5 mil to about 0.8 mil. This thickness can be applied in a single coating pass or a plurality of passes with very brief drying ("flash") between applications of coats.The application of the coating layers of the present invention generally follow the application to the substrate of a conventional corrosion resistant primer or electrocoat. To this primed substrate is applied the base coat. The base coat is typically applied from about 0.4 mil to about 2.0 mils and preferably about 0.5 mil to about 0.8 mil. This thickness can be applied in a single coating pass or a plurality of passes with very brief drying ("flash") between applications of coats.

Once the base coat has been applied, the transparent interference coats and topcoats are applied after allowing the base coat to flash at ambient temperature for about 30 seconds to about 10 minutes, preferably about one minute to about three minutes. Similar drying delays are allowed between applications of the interference coat and the topcoat. While the respective coats can be dried for longer periods of time, even at higher temperatures, a much improved product is produced by application of the successive coats after only a brief flash ("wet-on-wet). Some drying out of the preceding coat is necessary to prevent total mixing of the respective coats. However, a minimal degree of interaction is desirable for improved bonding of the coatings. The topcoat is applied thicker than the preceding coats (preferably about 1.8 mils to 2.3 mils) and can also be applied in a single or multiple pass.

The term transparent film is defined as film through which the base coat and interference coat can be seen. As stated above it is prefered that the transparent film contain a UV absorbing compound and/or hindered amine stablizer and be substantially colorless so that the full polychromatic and aesthertic effect of the base coat-interference coat is not substantially decreased. The outstanding feature of the topcoat is the significant improvement in the durability which is provided to the overall coating. The total dry film thickness for this multi-layered coating system is typically about 3.1 mils to 4.9 mils and preferably about 3.7 mils. Sufficient wetting takes place at the interface of the respective coatings so that no problem with delamination or solvent release from either coating is incured.

Once the successive coats are applied the entire system is again flashed for about 30 seconds to about 10 minutes and the total coatings are then baked at a temperature sufficient to drive off all of the solvent in the case of thermoplastic layers and a temperature sufficient to cure and cross-link in the case of the thermosetting layers. These temperatures can range anywhere from ambient temperature to about 400° F (205° C). Typically in the case of thermosetting material temperatures of about 225° F. to about 280° F. (for example 250° F.) are used (e.g. for about 30 minutes).

The compositions and processes according to the present invention provide many improvements over the paint compositions and processes of the prior art. Unique color effects and better hiding of surface defects can be produced. Weather durable color effects are produced not available with other pigment systems while maintaining an appealing and desirable soft, lustrous appearance.

The applied compositions are not moisture sensitive, are less sensitive to criticality of applications, can withstand the elements (i. e. sun exposure), do not operate with subrractive color effects when mixed with other pigments, allow low bake repair color matching, and resist settling and chemical (e.g. acid rain) attach.

It should be noted that while the compositions of the present invention are particularly adapted for original equipment manfacture coatings for automobiles, one of their advantages is the low bake matching use as refinish compositions as well. Whereas in original equipment manufacture the disclosed cellulose esters and/or wax are typically used, such are not universally required, for example, in refinish compositions. Also, where the thermosetting polymer embodiments are preferred in the original equipment manufacture, in refinish either low temperature cure thermosetting materials e.g. 150° F-180° F (66° C-82° C) or ambient temperature cure thermosetting or thermoplastic materials are preferred.

Althrough this invention has been shown and described with respect to detailed embodiments thereof, it will be understood by those skilled in the art that various changes in form and detail thereof may be made without departing from the spirit and scope of the claimed invention.

## Claims

1. A multi-layer coating system comprising
A) a layer of a non-metallic primary base coat comprising a polymeric binder and a base coat pigment;

B) a layer of transparent intermediate coat overlying said primary base coat, comprising

1) a polymeric binder;

2) a pigment comprising

a) particles of transparent metal oxide encapsulated mica; and

b) an organic pigment; wherein the color of said organic pigment is complementary to the color of said transparent metal oxide encapsulated mica; and

C) a layer of transparent protective polymeric clear coat overlying said transparent intermediary coat;

said coating system exhibiting color travel and opalescent color effects.

2. A multi-layer coating system according to claim 1, characterized by the fact that the organic pigment of the layer of transparent intermediate coat is of a color similar to or the same as that of the base coat pigment.

3. A multi-layer coating system according to claim 1 or 2, characterized by the fact that the particles of transparent metal oxide encapsulated mica are of a color which is similar to the color of the base coat pigment.

4. A multi-layer coating system according to claim 1 or 2, characterized by the fact that the base coat pigment and the organic pigment of the layer of transparent intermediate coat are of a red color and the particles of transparent metal oxide encapsulated mica are of a green color, or vice-versa.

5. A multi-layer coating system according to claim 1 or 2, characterized by the fact that the base coat pigment and the organic pigment of the layer of transparent intermediate coat are of a blue color and the particles of transparent metal oxide encapsulated mica are of an orange color, or vice-versa.

6. A multi-layer coating system according to claim 1 or 2, characterized by the fact that the base-coat pigment and the organic pigment of the layer of transparent intermediate coat are of a yellow color and the particles of transparent metal oxide encapsulated mica are of a purple color, or vice-versa.

7. A multi-layer coating system according to any one of the preceding claims, characterized by the fact that the layer of transparent intermediate coat comprises a combined organic pigment and transparent metal oxide encapsulated mica particle pigment to binder ratio of between about 0.0025 to about 0.10, preferably about 0.005.

8. A multi-layer coating system according to any one of the preceding claims, characterized by the fact that the weight ratio of transparent metal oxide encapsulated mica particles to the organic pigment is about 0.95:0.05, preferably about 0.80:0.20.

9. A method of coating a substrate, particularly metal, comprising the steps of

a) applying to said substrate a layer of non-metallic primary base coat composition comprising a polymeric binder and a base coat pigment;

b) forming a film of said base coat composition on said substrate;

c) applying over said film of base coat a layer of a transparent intermediate coat composition comprising

1) a polymeric binder;

2) a pigment comprising particles of transparent metal oxide encapsulated mica; and

an organic pigment;

wherein the color of said organic pigment is complementary to the color of said transparent metal oxide encapsulated mica; and

d) forming a film of said intermediate coat composition on said base coat layer;

e) applying a layer of transparent protective polymeric clear coat composition over said transparent intermediary coat; and

f) forming a film of said transparent protective polymeric clear coat on said transparent intermediate coat;

said coating system exhibiting color travel and opalescent color effects.

10. A method according to claim 9, characterized by the fact that the substrate is metal, and the substrate is coated by one or more layers of corrosion protective film prior to the step of applying said layer of non-metallic primary base coat.

11. A method according to claim 9 or 10, characterized by the fact that the base coat is of a thickness of between about 0.4 mil and about 2.0 mils, preferably between about 0.7 mil and about 0.8 mil.

12. A method according to any one of claims 9 to 11, characterized by the fact that the layer of transparent intermediate coat is of a thickness of between about 0.4 mil and about 2.0 mils.

13. A method according to any one of claims 9 to 12, characterized by the fact that the layer of protective transparent clear coat is of a thickness of between about 1.8 mils and about 2.3 mils, preferably between about 1.9 mils and about 2.1 mils.

14. An article characterized by being coated with a multi-layer coating system according to any one of claims 1 to 8.

FIG.I

EP 0 388 932 A2

FIG.2

EP 0 388 932 A2